(19) Europäisches Patentamt
European Patent Office
Office européen des brevets

(11) **EP 2 873 685 A1**

(12) **EUROPEAN PATENT APPLICATION**

(43) Date of publication:
**20.05.2015 Bulletin 2015/21**

(51) Int Cl.:
***C08J 3/20*** *(2006.01)*  ***B29C 47/10*** *(2006.01)*
***C08K 3/04*** *(2006.01)*

(21) Application number: **13192698.2**

(22) Date of filing: **13.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Abu Dhabi Polymers Co. Ltd (Borouge) LLC.**
**Abu Dhabi (AE)**
• **Borealis AG**
**1220 Vienna (AT)**

(72) Inventors:
• **Deveci, Süleyman**
**Abu Dhabi (AE)**
• **Antony, Nisha**
**Abu Dhabi (AE)**

• **Kang, Peck Tze**
**18-01, 049145 Singapore (SG)**
• **Barroso, Vitor**
**Abu Dhabi (AE)**
• **Motha, Kshama**
**Abu Dhabi (AE)**
• **Daclan, Owen**
**Abu Dhabi (AE)**
• **Al Marzoogi, Haitham**
**Abu Dhabi (AE)**
• **Megdad, Ismail**
**Abu Dhabi (AE)**
• **Jayapal, Sivasubramanian**
**Abu Dhabi (AE)**

(74) Representative: **Maiwald Patentanwalts GmbH**
**Elisenhof**
**Elisenstrasse 3**
**80335 München (DE)**

(54) **Direct feeding of carbon black in the production of black compounds for pipe and wire and cable applications / Polymer composition with improved properties for pressure pipe applications**

(57) Process for mixing pigments in a polymer suitable for end use, as well as to pipes comprising said polymer including pigment obtained by said process.

**Description**

The present invention relates to a new process for mixing pigments in a polymer suitable for end applications, as well as to pipes comprising the polymer additivated with the pigment according to the new process.

Typically a masterbatch of pigments and a polymer matrix is used to obtain pigmented, e.g. black or colored, polymer or polymer composition suitable for end applications. Typically the masterbatch is added during the final extrusion step in a product forming process, like in a polymer polymerization process for producing pigmented polymer pellets from polymer powder obtained from the polymerization reactor or in a pipe extrusion process for producing a pigmented pipe. Essential feature of a masterbatch is not only rather high amounts of pigments dispersed in the polymer matrix but also that the pigments are immobilized on the polymer matrix. In other words in a typical masterbatch the pigment itself is not free flowing but fixed on the matrix. The effect of immobilization is achieved due to melting the polymer and dispersing the pigment in the molten polymer and subsequently solidifying the obtained melt mixture to form masterbatch pellets for use in the product formation process.

Several methods have been proposed to produce masterbatches as indicated below.

WO 2009/059967 defines the production of a masterbatch of carbon black in a relatively small extruder in which carbon black is mixed in a molten polymer. This masterbatch is subsequently fed into a main extruder.

WO 2004/106421 describes the method of making a conductive thermoplastic composition. It describes the dry blending of conductive carbon black and a first polymer which is subsequently melt blended with a second polymer obtaining a masterbatch.

US 4,369,267 relates to preparation of a final black polyethylene composition comprising at least 50 wt.-% of low density polyethylene (LDPE). An initial masterbatch is prepared by melt mixing carbon black with LDPE in a Banbury Mixer, i.e. batchwise. Subsequently the initial masterbatch is for instance melt mixed with high density polyethylene HDPE in a second mixer. After that the thus obtained masterbatch is diluted with base polymer obtaining the final product.

All approaches used for additivating the polymer suitable for end applications in here in that a masterbatch is produced in which during the manufacture of the masterbatch the pigment is dispersed in a molten polymer. In other words the pigment is immobilized on the polymer.

Accordingly when a masterbatch is used in production of pigmented end applications there are at least two production steps needed. First the production of the masterbatch and second the dilution of the masterbatch in a final composition used for the manufacture of the end application. This in turn means additional resources in terms of time and costs for the preparation of pigmented end applications. There are also additional costs caused due to the need of stabilization additives required in the masterbatch compounding step.

As regards technical performance of the final application, the presence of the matrix polymer of the masterbatch can have a negative impact on property requirements. Examples are increased sagging in pipe and reduced mechanical strength and stiffness.

Thus the object of the present invention is to circumvent the disadvantages connected with the use of a masterbatch as discussed above.

The present invention is based on the finding that when adding a pigment in free flowing form to a polymer (which is used to form the main or one of the main component(s) of an end product), unexpectedly a high dispersion of the pigment in the final polymer mixture is achieved. The very good dispersion can be obtained by using conventional extruders and extrusion conditions. The finding is in sharp contrast to the prejudice in this technical area, namely that mixing of substantially different amounts of particulate components lead to separation effects. Surprisingly, the present invention provides a polymer mixture in which the pigment is highly dispersed.

Thus the present invention is in particular directed to a process for producing a solid pigmented polymer product (sPGPP) of a polymer composition (PC) comprising a polymer (P) and a pigment (PG), wherein said process comprises the steps in the order of

(a1) feeding free flowing pigment (FFP), preferably neat free flowing pigment (nFFP), and solid polymer (sP) in the same inlet, e.g. in the same hopper, of a melt extruder,
(a2) melt mixing the solid polymer (sP) and the free flowing pigment (FFP), preferably the neat free flowing pigment (nFFP), in said melt extruder to obtain the polymer composition (PC) in a molten form, wherein the polymer (P) is in a molten state in which the pigment (PG) is dispersed,
(a3) extruding the polymer composition (PC) in a molten form from the melt extruder and
(a4) converting the molten polymer composition (PC) into said solid pigmented polymer product (sPGPP);

or

(b1) combining free flowing pigment (FFP), preferably neat free flowing pigment (nFFP), with solid polymer (sP) obtaining thereby a mixture (M) of free flowing pigment (FFP) and solid polymer (sP),

(b2) feeding said mixture (M) in the inlet, e.g. in the hopper, of a melt extruder,

(b3) melt mixing said mixture (M) in said melt extruder to obtain the polymer composition (PC) in a molten form, wherein the polymer (P) is in a molten state in which the pigment (PG) is dispersed,

(b4) extruding the polymer composition (PC) in a molten form from the melt extruder and

(b5) converting the molten polymer composition (PC) into said solid pigmented polymer product (sPGPP).

Following definitions are applicable for the present invention, if not otherwise indicated.

The term "free flowing pigment (FFP)" defines a pigment which is not immobilized on a polymer matrix, like it is the case for a typical masterbatch. A typical masterbatch is obtained by mixing pigment and molten polymer and subsequently solidifying the obtained mixture whereby the pigment is immobilized on the polymer which acts as a matrix. In such a typical masterbatch the immobilized pigments themselves are not free flowing but the polymer particles (in form for instance of a powder, pellet or granule) comprising the immobilized pigments. In turn the "free flowing pigment" - as the wording indicates - itself is free flowing and is not immobilized on a polymer matrix. This definition however does not exclude the option that the free flowing pigment is dry blended with other solid components, like solid polymers, or blended with a liquid carrier medium, like a chemically inert solvent or with a liquid other additive of the polymer composition (PC). However in case the free flowing pigment (FFP) is blended it is preferred that the free flowing pigment (FFP) is dry blended with other solid components, like solid polymers. In such dry blend or dry mixture of pigments and other solid components, like pigments and solid polymers, each of the individual components is free flowing itself, e.g. the pigment and the solid polymer.

The term "neat free flowing pigment (nFFP)" requires in addition to the definition provided in the previous paragraph that the free flowing pigment (FFP) is not combined with any other component, like a solid carrier polymer or solid further polymer component of the polymer composition (PC); liquid carrier or additive medium as mentioned above, or other solid additive of the polymer composition (PC). For instance the term "neat free flowing pigment (nFFP)" excludes any (dry) blends or (dry) mixtures of pigments and other components, like dry blends or dry mixtures of pigments and solid polymers. In other words in case of neat free flowing pigment (nFFP) the free flowing pigment (FFP) in its pure form, i.e. as such, is used.

The term "pigment (PG)" is used for the (neat) free flowing pigment ((n)FFP) when dispersed in the molten polymer, i.e. dispersed in the polymer (P) in the molten state, or when the (neat) free flowing pigment ((n)FFP) is immobilized in the solid pigmented polymer product (sPGPP) due to the applied process. In other words the term "pigment (PG)" is used for a non-free flowing state of the pigment.

The term "solid polymer" indicates that the polymer is solid (and thus not molten) at a temperature up to 80 °C and atmospheric pressure.

The term "solid pigmented polymer product (sPGPP)" stands for the final product of the present process, wherein preferably the conversion steps (a4) or (b5) are accomplished by using a melt extruder or an article forming unit arranged after the extrusion step (a3) or (b4), preferably step (b4) as defined above. It is per definition in solid form, preferably in solid form at a temperature up to 80 °C and atmospheric pressure. Further the term indicates that the product contains a pigment being dispersed in the polymer. As mentioned above the solid pigmented polymer product (sPGPP) is preferably in form of solid pigmented polymer pellets (sPPP), e.g. in form of solid pigmented polymer pellets (sPPP) for forming shaped articles, or in a form of a shaped article. The preferred embodiment of the invention is the solid pigmented polymer product (sPGPP) in form of solid pigmented polymer pellets (sPPP), e.g. in form of solid pigmented polymer pellets (sPPP) for forming shaped articles.

The term "solid pigmented polymer pellets (sPPP)" indicates that the pellets are in solid form, preferably in solid form at a temperature up to 80 °C and atmospheric pressure. Further the term indicates that the pellets contain a pigment being dispersed in a polymer. Preferably the solid pigmented polymer pellets (sPPP) are suitable for forming shaped articles.

The term "inlet of the melt extruder" can be the main inlet of the melt extruder or a side inlet or both. Preferably the "inlet of the melt extruder" is the main inlet, more preferably the main inlet is in the form of a hopper. In case of a side inlet a side feeder is preferably used.

The term "molten state" indicates that all or part of the polymer component(s) of the polymer composition (PC) is/are non-solid under the given conditions.

The term "shaped article" stands for any end article after the conversion step (a4) or (b5), preferably after the conversion step (b5). Moreover, "shaped article" means both an article produced using the polymer composition (PC) in molten form as obtained from step (a3) or (b4) and also an article produced from the solid pigmented polymer pellets (sPPP) obtained from step (a3) or (b4). The term "shaped article" thus excludes solid pigmented polymer pellets (sPPP) as such which can be an alternative solid pigmented polymer product (sPGPP) after the conversion step (a4) or (b5).

When the shaped article is produced using solid pigmented polymer pellets (sPPP) of the present process, then the article conversion step can, and preferably is, carried out separately from the process steps (a1) to (a4) or (b1) to (b5), i.e. in a further step (c). In case of producing the shaped article using the solid pigmented polymer pellets (sPPP), the solid pigmented polymer pellets (sPPP) are produced during the polymerization process of the polymer (P) (as explained in detail below) and the shaped article is produced by the end article producer.

Accordingly a shaped article can be an extruded article, which is preferably a pipe or pipe fitting, a layer of a cable or wire, fiber, cast film, sheet, or extrusion coated article; a molded article, preferably an injection molded article, a compression molded article or a blow molded article and preferably selected from a packaging, a household appliance, an industrial appliance or a part of a vehicle; a blown film (e.g. packaging film, bag, sack, geomembrane), a fiber product (e.g. fiber, fabric, industrial films, like geomembranes or agriculture films etc.); and a conductive carbon black product. More preferably the shaped article is an extruded article, which is preferably a pipe product (pipe or pipe fitting).

"Conveying means" can be any means which conveys the solid components from one place to the other. Preferably the conveying means convey the material, e.g. the (neat) free flowing pigment ((n)FFP) and solid polymer (sP), to the inlet (hopper or side feeder) of a melting extruder. Preferably such conveying means comprises or is a screw conveyer arranged to feed the polymer component(s) and optional additives to the inlet (hopper or side feeder) of a melting extruder. However such a screw conveyer does not apply forces to such extent that the conveyed polymer components start to melt.

Additionally, as evident for a skilled person, also a mixing (dispersion) in various degree may occur during the conveying step in such extend that the components are at least partially dry mixed. The degree of mixing naturally depends on the nature of the used conveying means and the presence of any mixing means arranged thereto. Thus the degree of mixing, i.e. dispersion of (neat) free flowing pigment ((n)FFP) to the solid polymer (sP) can vary and is not critical. The preferred conveying means is a screw conveyer.

The "mixing" or "mixture (M)" in step (b1) shall indicate a dry mixture wherein the components have their individual properties. In other words the term blend does not encompass for instance any melt mixed compositions.

Preferably in step (b1) the free flowing pigment (FFP), preferably neat free flowing pigment (nFFP), is mixed with solid polymer (sP) in a conveying means and thereby a mixture (M) of free flowing pigment (FFP) and solid polymer (sP) is obtained. Thus in one preferred embodiment of the second aspect (steps (b1) to (b5)) of the invention, the process for producing a solid pigmented polymer product (sPGPP) of a polymer composition (PC) comprising a polymer (P) and a pigment (PG), comprises the steps in the order of

(b1) adding free flowing pigment (FFP), preferably neat free flowing pigment (nFFP), and solid polymer (sP) to the same conveying means (CM) to convey together the free flowing pigment (FFP), preferably the neat free flowing pigment (nFFP), and the solid polymer (sP) to the same inlet, e.g. to the same hopper, of a melt extruder, obtaining thereby a mixture (M) of free flowing pigment (FFP) and solid polymer (sP),
(b2) feeding said mixture (M) in the inlet, e.g. in the hopper, of the melt extruder,
(b3) melt mixing said mixture (M) in said melt extruder to obtain the polymer composition (PC) in a molten form, wherein the polymer (P) is in a molten state in which the pigment (PG) is dispersed,
(b4) extruding the polymer composition (PC) in a molten form from the melt extruder and
(b5) converting the molten polymer composition (PC) into said solid pigmented polymer product (sPGPP).

The combining of the free flowing pigment (FFP), preferably the neat free flowing pigment (nFFP), with solid polymer (sP) in step (b1) is accomplished without a melting step. Otherwise the mixture (M) would not contain free flowing pigment (FFP) and solid polymer (sP).

The solid pigmented polymer product (sPGPP) is preferably solid pigmented polymer pellets (sPPP), e.g. solid pigmented polymer pellets (sPPP) for forming shaped articles, or a shaped article produced using solid pigmented polymer product (sPGPP). In the preferred embodiment the solid pigmented polymer product (sPGPP) is in a form of solid pigmented polymer pellets (sPPP) for forming shaped articles.

The use of a melt extruder inheres in continuous melt mixing in the melt extruder of the polymer (P) being at least partially, preferably being fully, in the molten sate, and the pigment (PG). Accordingly at least the steps (a1) to (a3), and (b2) to (b4) are continuous process steps.

The polymer (P) of the polymer composition (PC) (and thus also the solid polymer (sP)) preferably comprises polyethylene and/or polypropylene, more preferably polyethylene. The type of the polyethylene can vary being polyethylene produced in a high pressure process using a radical initiator or in a "low" pressure process using a coordination catalyst, preferably Ziegler Natta catalyst, single site catalyst, including metallocenes, or chromium catalyst, or any mixtures thereof, preferably a Ziegler Natta catalyst.

The solid polymer (sP) preferably is selected from the form consisting of powder or pellets.

The (neat) free flowing pigment ((n)FFP) preferably is

(a) carbon black and/or a color pigment different to carbon black, preferably carbon black,
and/or
(b) selected from the form consisting of powder, pellet, nanotube, nanofiber and mixtures thereof.

In one embodiment the solid pigmented polymer product (sPGPP) comprises, based on the total amount of said solid pigmented polymer product (sPGPP), less than 10 wt.-% of the pigment (PG).

In another preferred embodiment the solid pigmented polymer product (sPGPP) comprises, based on the total amount of said solid pigmented polymer product (sPGPP), 10 to 60 wt.-% of the pigment (PG).

The solid pigmented polymer product (sPGPP) is preferably either in a form of solid pigmented polymer pellets (sPPP), more preferably in form of solid pigmented polymer pellets (sPPP) for forming shaped articles, or a shaped article. The preferred solid pigmented polymer product (sPGPP) is in form of solid pigmented polymer pellets (sPPP). Most preferably the solid pigmented polymer product (sPGPP) is in form of solid pigmented polymer pellets (sPPP) which are subsequently used for producing a shaped article.

One essential finding of the present invention is that the solid pigmented polymer product (sPGPP), e.g. the solid pigmented polymer pellets (sPPP), shall not act as a masterbatch in the shaped article, preferably in the pipe or pipe fitting. Accordingly it is preferred that the solid pigmented polymer product (sPGPP), i.e. the solid pigmented polymer pellets (sPPP) or the shaped article, like the pipe or pipe fitting, comprises, based on the total amount of the solid pigmented polymer product (sPGPP), at least 40 wt.-%, more preferably at least 60 wt.- %, yet more preferably at least 80 wt.-%, still yet more preferably at least 90 wt.-%, of the polymer composition (PC).

Thus in one preferred embodiment (embodiment (A)) the solid pigmented polymer product (sPGPP) comprises at least 40 wt.-%, more preferably at least 60 wt.-%, yet more preferably at least 80 wt.-%, still yet more preferably at least 90 wt.-%, most preferably consists of, the polymer composition (PC), wherein said polymer composition (PC) comprises, preferably consists of,

  (a) at least 40 wt.-% of polymer (P),
  (b) less than 10 wt.-% of the pigment (PG), like 0.1 to 10 wt.-% of the pigment (PG),
  (c) optional further polymer component(s), and
  (d) optional further additives than the pigment (PG),
  wherein further said solid pigmented polymer product (sPGPP) is in the form of solid pigmented polymer pellets (sPPP) or in the form of a shaped article, preferably in the form of solid pigmented polymer pellets (sPPP) for producing a shaped article.

In another preferred embodiment (embodiment (B)) the solid pigmented polymer product (sPGPP) comprises at least 40 wt.-%, more preferably at least 60 wt.-%, yet more preferably at least 80 wt.-%, still yet more preferably at least 90 wt.-%, most preferably consists of, the polymer composition (PC), wherein said polymer composition (PC) comprises, preferably consists of,

  (a) at least 40 wt.-% of the polymer (P),
  (b) 10 to 45 wt.-% of the pigment (PG),
  (c) optional further polymer component(s), and
  (d) optional further additives than the pigment (PG),

wherein further said solid pigmented polymer product (sPGPP) is in the form of solid pigmented polymer pellets (sPPP) or in the form of a shaped article, preferably in the form of solid pigmented polymer pellets (sPPP) for producing a shaped article.

More preferably the solid pigmented polymer pellets (sPPP) are used to produce a shaped article which comprises, preferably consists of, the polymer composition (PC), wherein said polymer composition (PC) comprises, preferably consists of,

  (a) at least 40 wt.-% of polymer (P),
  (b) less than 10 wt.-% of the pigment (PG), preferably 0.1 to 10 wt.-% of the pigment (PG),
  (c) optional further polymer component(s), and
  (d) optional further additives than the pigment (PG).

The amount of pigment (PG) in the solid pigmented polymer product (sPGPP) depends on the final application.

With regard to embodiment (B) as defined above it is preferred that the polymer composition (PC), more preferably the solid pigmented polymer product (sPGPP) being either the solid pigmented polymer pellets (sPPP) or the shaped article, still more preferably the solid pigmented polymer product (sPGPP) being the solid pigmented polymer pellets (sPPP) or being the shaped article obtained by using solid pigmented polymer pellets (sPPP), comprises 10 to 60 wt.-%, more preferably 10 to 45 wt.-%, still more preferably 12 to 45 wt.- %, yet more preferably 15 to 30 wt.-%, of the pigment (PG).

The solid pigmented polymer product (sPGPP), i.e. the solid pigmented polymer pellets (sPPP) or the shaped article, is most preferably according to embodiment (A).

With regard to embodiment (A) as defined above it is preferred that the polymer composition (PC), more preferably the solid pigmented polymer product (sPGPP) being either the solid pigmented polymer pellets (sPPP) or the shaped article, still more preferably the solid pigmented polymer product (sPGPP) being the solid pigmented polymer pellets (sPPP) or being the shaped article obtained by using solid pigmented polymer pellets (sPPP), comprises less than 10 wt.-%, more preferably 0.01 to 10 wt.-%, still more preferably in the range of 0.1 to 8.0 wt.-%, and most preferably in the range of 1.0 to 7.0 wt.-%, of the pigment (PG).

As mentioned above the polymer (P) shall be the main part of the solid pigmented polymer product (sPGPP), i.e. of the solid pigmented polymer pellets (sPPP) or of the shaped article, like of the pipe or pipe fitting. Thus it is preferred that the amount of polymer (P), based on the total amount of polymer(s) present in the solid pigmented polymer product (sPGPP) or the shaped article obtained by using solid pigmented polymer pellets (sPPP), is at least 50 wt.-%, more preferably at least 70 wt.-%, still more preferably at least 80 wt.-%, like at least 95 wt.-%.

As to the shaped articles, the polymer composition (PC) after step (a3) or (b4) is converted to a shaped article or, preferably, the shaped article is produced using solid pigmented polymer pellets (sPPP), by

(A) extruding the molten polymer composition (PC) from said melt extruder, which is preferably, more preferably selected from

(A1) a pipe extruder for forming a pipes as the solid pigmented polymer product (sPGPP),
(A2) a cast film extruder for forming a cast films as the solid pigmented polymer product (sPGPP), or
(A3) a cable extruder for forming a layer(s) of a cable or wire as the solid pigmented polymer product (sPGPP);

or

(B) extruding the molten polymer composition (PC) from said melt extruder to an article forming unit, which is preferably

(B1) an injection molding unit to form injection molded articles as the solid pigmented polymer product (sPGPP),
(B2) a compression molding unit to form compression molded articles as the solid pigmented polymer product (sPGPP),
(B3) a blow molding unit to form blow molded articles as the solid pigmented polymer product (sPGPP), or
(B4) a film blowing unit to form blown films.

In one preferred embodiment the melt extruder is a pipe extruder for forming pipes. Accordingly the solid pigmented polymer product (sPGPP) is a pipe. Thus in one preferred embodiment in step (a3) or (b4) the molten polymer composition (PC) is extruded from a pipe extruder and subsequently converted by a shaping mandrel and cooling device into a pipe (step (a4) or (b5)).

In another embodiment the melt extruder is a cast film extruder for cast films. Accordingly the solid pigmented polymer product (sPGPP) is a cast film. Thus in one preferred embodiment in step (a3) or (b4) the molten polymer composition (PC) is extruded from a cast film extruder and subsequently cooled on a chill roll forming thereby a cast film (step (a4) or (b5)).

In still another embodiment the melt extruder is a cable extruder for forming a layer(s) of a cable or wire. Accordingly the solid pigmented polymer product (sPGPP) is a layer(s) of a cable or wire. Thus in one preferred embodiment in step (a3) or (b4) the molten polymer composition (PC) is extruded from a cable extruder and passed in step (a4) or (b5) through a crosshead or an offset tubular die to form at least one layer on the cable (or wire) whereby subsequently the polymer composition (PC) cools rapidly upon exposure to air.

In yet another embodiment the molten polymer composition (PC) of step (a3) or (b4) is extruded to an article forming unit. Accordingly in step (a4) or (b5) an article forming is used which is preferably selected from the group consisting of injection molding unit, compression molding unit and blow molding unit. Accordingly the obtained solid pigmented polymer product (sPGPP) is preferably selected from the group consisting of an injection molded article, a compression molded article and a blow molded film.

Shaped article is most preferably pipe or pipe fitting produced by a pipe extruder.

All the above referred extruders and article forming units are well known and commercially available in the respective technical field and can be chosen by the article producer depending on the needs for the articles.

In the preferred embodiment the inventive process is part of a polymerization production line in which first the polymer (P) is produced in at least one reactor and subsequently discharged in solid form, wherein further said discharged solid polymer (sP) is combined with free flowing pigment (FFP), preferably neat free flowing pigment (nFFP), in a post treatment step (C) comprising the steps (a1) to (a4) or (b1) to (b5), wherein preferably the solid pigmented polymer product (sPGPP) is in form of solid pigmented polymer pellets (sPPP) for forming shaped articles.

Accordingly in one specific aspect the present invention is directed to a continuous process for producing a solid pigmented polymer product (sPGPP) in a polymerization production line, wherein the solid pigmented polymer product (sPGPP) is a polymer composition (PC) comprising a polymer (P) and a pigment (PG), wherein said process in the polymerization production line comprises the steps in the order of

(A) producing the polymer (P) in at least one reactor
(B) discharging the polymer (P) in solid form, i.e. discharging solid polymer (sP), from the reactor, preferably discharging the solid polymer (sP) in form of powder or pellets from the reactor and
(C) in the post-treatment-line
(a1) feeding free flowing pigment (FFP), preferably neat free flowing pigment (nFFP), and solid polymer (sP) in the same inlet, e.g. in the same hopper, of a melt extruder,
(a2) melt mixing the solid polymer (sP) and the free flowing pigment (FFP), preferably the neat free flowing pigment (nFFP), in said melt extruder to obtain the polymer composition (PC) in a molten form, wherein the polymer (P) is in a molten state in which the pigment (PG) is dispersed,
(a3) extruding the polymer composition (PC) in a molten form from the melt extruder and
(a4) converting the molten polymer composition (PC) in form of said solid pigmented polymer pellets (sPPP); or
(b1) combining (neat) free flowing pigment ((n)FFP) with solid polymer (sP) obtaining thereby a mixture (M) of free flowing pigment (FFP) and solid polymer (sP), preferably adding (neat) free flowing pigment ((n)FFP) and solid polymer (sP) to the same conveying means (CM) to convey together the (neat) free flowing pigment ((n)FFP) and the solid polymer (sP) to the same inlet, e.g. to the same hopper, of a melt extruder, obtaining thereby a mixture (M) of free flowing pigment (FFP) and solid polymer (sP),
(b2) feeding said mixture (M) in the inlet, e.g. in the hopper, of the melt extruder,
(b3) melt mixing said mixture (M) in said melt extruder to obtain the polymer composition (PC) in a molten form, wherein the polymer (P) is in a molten state in which the pigment (PG) is dispersed,
(b4) extruding the polymer composition (PC) in a molten form from the melt extruder and
(b5) converting the molten polymer composition (PC) in form of solid pigmented polymer pellets (sPPP).

Preferably the solid polymer (sP) which is discharged in step (B) from the reactor is in form of a powder. Further it is preferred that the solid pigmented polymer product (sPGPP) obtained in the polymerization production line is in form of solid pigmented polymer pellets (sPPP) for forming shaped articles.

The term "polymerization production line" indicates that the described steps are part of a polymerization process including the subsequent post-treatment steps. Typically in a post-treatment step the produced polymer is additivated and pelletized.

The terms "continuous", "continuous process" or "continuous process steps" indicate that (neat) free flowing pigment ((n)FFP) and solid polymer (sP) are continuously fed at the same time into the melt extruder, and are continuously melt mixed in the melt extruder to a molten polymer composition (PC) and the obtained molten polymer composition (PC) is continuously extruded from the melt extruder. Preferably also the converting of the discharged molten polymer composition (PC) is subsequently continuously formed to the solid pigmented polymer pellets (sPPP).

The term "powder" indicates that in contrast to the pellets is not melt extruded or subjected any other forming process. The term "polymer powder" preferably indicates that it is the polymer as discharged from the reactor and thus not being melt extruded to any pellet or shaped article, referred herein also as "reactor powder".

As to step b1) of the inventive process, the conveying means preferably comprises or is a screw conveyer. The screw conveyer has a well-known meaning in the field of polymers and polymerization processes of a polymer, and are supplied by well-known suppliers such as Coperion, Japan Steel Works, LEISTRITZ, B&P Process, KraussMaffei Berstorff, ICMA, COMAC, MARIS, XINDA STEER. The screw conveyer can be part of the feeding system of an extrusion process.

The melt extruder in this continuous process embodiment is preferably a conventional industrial scale compounding extruder used for pelletizing the polymer (P) product coming from the polymerization reactor system. As an example of an extruder for the present compounding step may be those supplied by Japan Steel works, Kobe Steel or Farrel-Pomini.

The present invention is also directed to a pipe or pipe fitting obtained by a process according to the present invention.

Additionally the present invention is directed to a pipe or pipe fitting which comprises, preferably consists of, the polymer composition (PC) as defined above or below, wherein the polymer composition (PC) is free of any carrier polymer for the pigment (PG), which carrier polymer is other than the polymer (P).

Preferably, the polymer composition (PC), more preferably the solid pigmented polymer product (sPGPP), still more preferably the solid pigmented polymer pellets (sPPP) or the shaped article, like the pipe, comprises the polymer (P) as the sole polymer component. It is understood that any optional carrier polymer for the optional additive(s) is not calculated to the polymer components of the polymer composition (PC), more preferably of the solid pigmented polymer product (sPGPP), still more preferably of the solid pigmented polymer pellets (sPPP) or of the shaped article, like the pipe, which is preferably the shaped article produced by using solid pigmented polymer pellets (sPPP), but calculated on the amount of the respective additive.

More preferably, the amount of polymer (P) based on the total amount of the polymer composition (PC), more preferably based on the total amount of the solid pigmented polymer product (sPGPP), still more preferably of the solid pigmented polymer pellets (sPPP) or of the shaped article, like of the pipe, which is preferably the shaped article produced by using solid pigmented polymer pellets (sPPP), is at least 50 wt.-%, more preferably at least 70 wt.- %, still more preferably at least 80 wt.-%, like at least 95 wt.-%.

In a preferred embodiment the solid pigmented polymer product (sPGPP), more preferably the solid pigmented polymer pellets (sPPP) or the shaped article, like the pipe, which is preferably the shaped article produced by using solid pigmented polymer pellets (sPPP), consists of the polymer composition (PC) as defined above and below.

The optional additives include any conventional additives, such as antioxidant(s), stabilizer(s), neutralizer(s), lubricating agent(s), nucleating agent(s), and pigment(s) other than (neat) free flowing pigment ((n)FFP). The amounts can be those conventionally used in the art, preferably the total amount of optional further additives is between 0.0001 and 10 wt.-%, preferably 0.0001 and 5.0 wt.-%, preferably 0.0001 and 2.5 wt.-%, more preferably between 0.0001 and 1.5 wt.-%, still more preferably between 0.0001 and 1.0 wt.-%, based on the total weight of the polymer composition (PC), more preferably of the solid pigmented polymer product (sPGPP), still more preferably of the solid pigmented polymer pellets (sPPP) or of the shaped article, like of the pipe, which is preferably the shaped article produced by using solid pigmented polymer pellets (sPPP).

In the following the present invention is described in more detail.

The pellets according to this invention can be of any size and shape as obtained after melt extrusion from a pellet extruder. Accordingly in one embodiment the pellets are spherical preferably having a diameter in the range of 0.5 to 3.0 mm, e.g. in the range of 1.0 to 2.0 mm. In another embodiment the pellets have a cylindrical shape preferably with a cross-section dimension in the range of 0.5 to 3.0 mm, e.g. in the range of 1.0 to 2.0 mm, and/or a length of 0.5 to 3.0 cm, e.g. in the range 1.0 to 2.0 cm.

The invention describes two ways of obtaining the solid pigmented polymer product (sPGPP), namely the first embodiment including steps (a1) to (a4) and the second embodiment including steps (b1) to (b5).

Before describing the two embodiments in more detail the base products as well as the melt extruding step, which are for the two processes equally applicable, are defined in more detail.

The solid polymer (sP) can be in all embodiments in the form of a powder or pellets. In case the solid polymer (sP) is directly discharged from a polymerization reactor and immediately treated with the (neat) free flowing pigment ((n)FFP), it is preferred that said solid polymer (sP) is in the form of a powder or pellet, preferably a powder.

The solid polymer (sP) as well as obtained polymer (P) thereof in the solid pigmented polymer product (sPGPP) can be one polymer or a blend of polymers. Preferably the solid polymer (sP) comprises at least polyethylene and/or polypropylene. More preferably, the solid polymer (sP) consist(s) of polyethylene and/or polypropylene. In turn, the terms polyethylene and polypropylene may be a unimodal polyethylene and polypropylene, respectively, or, and preferably, a multimodal polyethylene- and polypropylene, with respect to the weight average molecular weight, i.e. multimodal polyethylene with respect to molecular weight distribution, MWD); to the melt flow rate and/or to the comonomer content, and including a bimodal polyethylene or polypropylene.

As to multimodal with respect to weight average molecular weight, usually, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions the composition is consisting of. Thus, for example, a multimodal composition consisting of two fractions only is called "bimodal". The polyethylene or polypropylene, preferably the multimodal polyethylene or polypropylene, can be produced using any process set-up and catalyst known in the art. Most preferably the polymer (P) is a polyethylene, more preferably a multimodal polyethylene as defined above, more preferably a multimodal polyethylene with respect to the weight average molecular weight and/or comonomer content. The type of the polyethylene can vary being polyethylene produced in polymerization process using a high pressure and a radical initiator or in a polymerization process using a coordination catalyst, preferably using a Ziegler Natta catalyst, single site catalyst, including metallocenes, or chromium catalyst, or any mixtures thereof, preferably using a Ziegler Natta catalyst. Most preferably the polymer (P) is a multimodal polyethylene with respect to the weight average molecular weight and/or comonomer content produced in a polymerization process using a coordination catalyst, preferably Ziegler Natta catalyst.

The polyethylene as the polymer (P) preferably has a density in the range of 915 to 970 kg/m$^3$, more preferably in the range of 920 to 965 kg/m$^3$, yet more preferably in the range of 915 to 965 kg/m$^3$, like 920-965 kg/m$^3$. In case the solid pigmented polymer product (sPGPP) is used for pipe applications, the density of the polyethylene is preferably in the range of 915 to 965 kg/m$^3$, like in the range of 920 to 965 kg/m$^3$.

Preferably the melt flow rate MFR$_5$ (190 °C) of the polyethylene is in the range of 0.01 to 10 g/10 min, more preferably 0.1 to 6.0 g/10 min. In case solid pigmented polymer product (sPGPP) is used for pipe applications, the melt flow rate MFR$_5$ (190 °C) of the polyethylene is preferably in the range of 0.1 to 6.0 g/10min, like in the range of 0.1 to 4.0 g/10min.

The polyethylene of the polymer (P) (preferably the polyethylene as the polymer (P)) can be an ethylene homopolymer or an ethylene copolymer. In case of an ethylene copolymer, said copolymer consist of units derivable from ethylene and at least one comonomer selected from the group consisting ofpropylene, 1-butene, 1-hexene and 1-octene. More preferably the comonomers are selected from the group consisting of 1-butene, 1-hexene and 1-octene. Still more preferably the comonomers are 1-butene and/or 1-hexene. In a preferred embodiment the solid polymer (sP) is a multimodal polyethylene as defined above comprising at least a polyethylene component with lower weight average molecular weight (LMW) (A) and a polyethylene component with higher weight average molecular weight polyethylene (HMW) (B), and optionally a prepolymer component. The LMW component (A) has lower weight average molecular weight than the HMW component (B). If the prepolymer component is present, then it is calculated into the amount of the LMW component (A).

The pigment (PG) (and thus also the (neat) free flowing pigment ((n)FFP)) can be any pigment. However it is preferred that the pigment (PG) preferably is carbon black and/or a color pigment different to carbon black. Preferably the pigment (PG) is an inorganic pigment or an organic pigment or a mixture thereof.

In case the pigment is a color pigment different to carbon black, it is preferred that such a pigment is an inorganic or organic pigment.

It is especially preferred that the pigment (PG) is carbon black. Still more preferably the pigment (PG) is carbon black, wherein said carbon black is selected from the group comprising of, preferably consisting of, furnace black, acetylene black and Ketjen black, which all have the well-known meaning in the art.

The pigment at least as (neat) free flowing pigment ((n)FFP)) can be selected from the form consisting of a powder, pellet, nanotube, nanofiber and mixtures thereof. In one embodiment the (neat) free flowing pigment ((n)FFP)) is in the form of a powder or pellets, still more preferably in the form of a powder. In yet another preferred embodiment the (neat) free flowing pigment ((n)FFP)) is a carbon black in the form of a powder or pellets, still more preferably in the form as provided by carbon black suppliers, i.e. the form of carbon black as supplied by the carbon black producer is not further processed (by the end user) before introduction to the process of the invention.

In case the (neat) free flowing pigment ((n)FFP)), like (neat) free flowing carbon black, the surface area is preferably in the range of 20 to 150 m$^2$/g, more preferably in the range of 30 to 100 m$^2$/g.

The melt extruder can be any conventionally used melt extruder with several zones along the length of the extruder for melting, mixing and conveying functions. Typically the melt extruder is a twin screw extruder (counter-rotating or co-rotating) preferably for industrial full scale production, equipped with a hopper for feeding the components and optionally provided with side feeding point(s) arranged after the hopper to introduce part of the component(s) in different zone(s) downstream the extruder. Exemplified suppliers are those mentioned earlier above. Moreover, the extrusion conditions depend on the nature and amount of the used main polymer component(s) and the used amount of the pigment and can be adjusted in a conventional manner by a person skilled in the art.

Accordingly, depending on the used main polymer component(s), the processing temperature in the melt extruder is 180 to 240 °C. Typical feed rates, especially for polyethylene and/or polypropylene, are 0.1 to 80 tons/hour, more preferably 30 to 70 tons/hour. Screw speed depends on the used extruder (size, screw type) and the amounts of feed(s), and can be adjusted by a skilled person.

Now the process steps are described in more detail.

1$^{st}$ Embodiment

According to a first aspect of the invention (steps (a1) to (a4)) free flowing pigment ((n)FFP) and solid polymer (sP) are fed in the same inlet of a melt extruder (step (a1)). More preferably the free flowing pigment ((n)FFP) and solid polymer (sP) are fed in the same inlet of a melt extruder at the same time (step (a1)). The inlet is preferably the main inlet, like for instance the hopper, of the melt extruder. When feeding free flowing pigment ((n)FFP), preferably neat free flowing pigment (nFFP), with solid polymer (sP) in the inlet, preferably main inlet, like a hopper, of the melt extruder other components can be added as well. Other components are for instance optional further polymers different to the solid polymer (sP) or optional other additives. These other components can be also fed via the same inlet or other inlets, like side feeder(s). In a preferred embodiment the free flowing pigment (FFP), preferably neat free flowing pigment (nFFP), with solid polymer (sP) is fed in the main inlet, like hopper, together with optional, and preferable, other additives.

The inlet guides the free flowing pigment ((n)FFP) together with the solid polymer (sP) (and other optional components) in to the melt extruder, where the solid polymer (sP) is molten through the applied shearing forces in the melt extruder and melt mixed with the formerly free flowing pigment ((n)FFP) obtaining thereby the polymer composition (PC) in molten form. If necessary, external heating can be applied. In the molten polymer composition (PC) the originally free flowing pigment ((n)FFP) is dispersed (step (a2)). Subsequently the polymer composition (PC) in molten form is extruded, preferably through a nozzle or die, from the melt extruder (step (a3)). Thereafter the molten polymer composition (PC) is converted into the solid pigmented polymer product (sPGPP) (step (a4)). The steps (a1) to (a3) are preferably continuously operated, meaning the free flowing pigment (FFP) and the solid polymer (sP) are fed together in at one end, preferably the (main) inlet, like the hopper, of the melt extruder and the thereby obtained polymer composition (PC) in molten form is extruded from the other end of the melt extruder (the outlet), preferably through a nozzle or die. Subsequently the polymer composition (PC) in molten form is solidified to the solid pigmented polymer product (sPGPP), which is preferably in form of solid pigmented polymer pellets (sPPP) or in form of the shaped article, more preferably in a form of solid pigmented polymer pellets (sPPP) (step (a4)). Preferably the steps (a1) to (a4) are operated continuously.

Depending on the conversion step (a4) the product, i.e. the solid pigmented polymer product (sPGPP), can vary in its form. In case the solid pigmented polymer product (sPGPP) is in form of solid pigmented polymer pellets (sPPP) step (a4) is a pelletizing step including the cutting equipment. In turn in case the solid pigmented polymer product (sPGPP) is a shaped article, step (a4) depends on the type of the shaped article. For instance in pipe production in step (a3) a pipe extruder is used and thus in step (a4) units are used which are normally placed downstream of the pipe extruder, like the shaping mandrel and cooling device. On the other hand in case of cast film production in step (a3) a cast film extruder is used with a slot die whereas in step (a4) the extruded film is inter alia placed on a chill roll. Still further in cable and wire production the molten polymer composition (PC) of step (a3) is passed in step (a4) through a crosshead or an offset tubular die to form at least one layer on the cable (or wire) whereby subsequently the polymer composition (PC) cools rapidly upon exposure to air. In the production of injection molded article, compression molded article and blow molded film the molten polymer composition (PC) of step (a3) is passed to an article forming unit. Thus in this case the conversion step (a4) takes place in the article forming unit, like in a unit selected from the group consisting of injection molding unit, compression molding unit and blow molding unit.

The steps (a1) to (a4) are preferably continuous steps in connection with the polymerization process of polymer (P) as mentioned above and in detail below.

In case of 1st embodiment it is preferred that the solid pigmented polymer product (sPGPP) is in the form of solid pigmented polymer pellets (sPPP) for producing shaped articles.

In one preferred embodiment the steps (a1) to (a4) are used to produce solid pigmented polymer pellets (sPPP) as solid pigmented polymer product (sPGPP).

2nd embodiment

According to another aspect of the present invention (steps (b1) to (b5)) (neat) free flowing pigment ((n)FFP) and solid polymer (sP) is combined obtaining thereby a mixture (M) of free flowing pigment ((n)FFP) and solid polymer (sP) (step (b1)). As apparent from the wording in the mixture (M) both components are present in its form before mixing was accomplished and thus are in (loose) contact with each other. Accordingly the mixture (M) is a dry mixture of free flowing pigment ((n)FFP) and solid polymer (sP). By combining the free flowing pigment ((n)FFP) and the solid polymer (sP) no melting of the solid polymer (sP) takes place. This mixture (M), i.e. the dry mixture, can be stored or immediately used in step (b2). The combining can be accomplished by a conveying means (CM). Conveying means (CM) can be any convential device with mechanical means to move the mixture (M) towards the inlet of the extruder (e.g. mechanical means inside and/or outside the conveyer) or caused by gravigation or fluidisation (e.g. gas). The choice of the conveying means (CM) is within the skills of the skilled person. Some mixing of the (neat) free flowing pigment ((n)FFP) and solid polymer (sP) may occur in the conveying means (CM) during the conveying the mixture (M) to the inlet of the melt extruder. The conveying means (CM) may also be provided with separate mixing means, like mechanical mixing means, to increase the dispersion of the (neat) free flowing pigment ((n)FFP) and solid polymer (sP). The preferred conveying means (CM) is a well-known screw conveyer obtaining thereby the mixture (M) of free flowing pigment (FFP), preferably neat free flowing pigment (nFFP), and solid polymer (sP). In case of a conveying means the mixture (M) is conveyed to the inlet of the melt extruder, preferably to the main inlet, like a hopper, of the melt extruder. Thus in a preferred embodiment said mixture (M) is fed in the main inlet of the melt extruder and subsequently is melt mixed in the melt extruder, where the solid polymer (sP) is molten through the applied shearing forces in the melt extruder and melt mixed with the formerly free flowing pigment (FFP) obtaining thereby the polymer composition (PC) in molten form. If necessary, external heating can be applied. In the molten polymer composition (PC) the originally free flowing pigment (FFP) is dispersed (step (b2)). Subsequently the polymer composition (PC) in molten form is extruded, preferably through a nozzle or die, from the melt extruder (step (b4)). Subsequently the polymer composition (PC) in molten form is solidified to the solid pigmented polymer product (sPGPP), which is preferably in form of solid pigmented polymer pellets (sPPP) or to in a form of the shaped article, more preferably in a form of solid pigmented polymer pellets (sPPP) (step (b5)) for producing shaped articles. Preferably the steps (b2) to (b5) are operated continuously, still more preferably the steps (b1) to (b5) are operated continuously.

Depending on the conversion step (b5) the product, i.e. the solid pigmented polymer product (sPGPP), can vary in its form. In case the solid pigmented polymer product (sPGPP) is in form of solid pigmented polymer pellets (sPPP) step (b5) is a pelletizing step including the cutting equipment. In turn in case the solid pigmented polymer product (sPGPP) is a shaped article, step (b5) depends on the type of the shaped article. For instance in pipe production in step (b4) a pipe extruder is used and thus in step (b5) units are used which are normally placed downstream of the pipe extruder, like the shaping mandrel and cooling device. On the other hand in case of cast film production in step (b4) a cast film extruder is used with a slot die whereas in step (b5) the extruded film is inter alia placed on a chill roll. Still further in cable and wire production the molten polymer composition (PC) of step (b4) is passed in step (b5) through a crosshead or an offset tubular die to form at least one layer on the cable (or wire) whereby subsequently the polymer composition (PC) cools rapidly upon exposure to air. In the production of injection molded article, compression molded article and blown film the molten polymer composition (PC) of step (b4) is passed to an article forming unit. Thus in this case the conversion step (b5) takes place in the article forming unit, like in a unit selected from the group consisting of injection molding unit, compression molding unit and film blowing unit.

Preferably the steps (b1) to (b4), more preferably the steps (b1) to (b5), are operated continuously in connection with the polymerization process of polymer (P) as mentioned above and in detail below.

In the preferred embodiment, the steps (b1) to (b5) are used to produce solid pigmented polymer pellets (sPPP) as solid pigmented polymer product (sPGPP).

In the following the 1st and 2nd embodiment are further described together.

As mentioned the solid pigmented polymer product (sPGPP) can be solid pigmented polymer pellets (sPPP). In such a case it is especially preferred that the inventive process according to the first embodiment (steps (a1) to (a4)) and the second embodiment (steps (b1) to (b5)) are integral part of a polymerization process. More precisely the (steps (a1) to (a4)) or (steps (b1) to (b5)) are part of post-polymerization treatment step (C). Thus in one preferred embodiment the process covering steps (a1) to (a4) or (b1) to (b5) is part of a polymerization production line in which first the polymer (P) is produced in at least one reactor and subsequently discharged in solid form. Said discharged solid polymer (sP) is treated with (neat) free flowing pigment ((n)FFP) in a post treatment step (C) comprising the steps (a1) to (a4) or (b1) to (b5), wherein the solid pigmented polymer product (sPGPP) is in the form of a solid pigmented polymer pellet (sPPP).

Accordingly prior to the step (a1) or (b1), most preferably prior to step (b1), the polymer (P) is produced in at least one polymerization reactor and subsequently discharged in solid form. When the polymer (P) has been removed from the last polymerisation stage, it is preferably subjected to process steps for removing the residual hydrocarbons from the polymer. Such processes are well known in the art and can include pressure reduction steps, purging steps, stripping steps, extraction steps and so on. Also combinations of different steps are possible. After the removal of residual hydrocarbons, such discharged solid polymer (sP) is preferably in powder form and post-treated. Typical post-treatment steps are addition of additives and the pelletizing step. For post-treatment the solid polymer (sP) is conveyed to the required processing unit. Thus it is preferred that the solid polymer (sP) in the post-treatment step (C) is contacted with free flowing pigment (FFP), preferably neat free flowing pigment (nFFP).

Preferably this contacting is carried out on the conveying means. Still more preferably the conveying means comprises or is a screw conveyer. In this screw conveyer the solid polymer (sP) (freshly) produced in the polymerization reactor is dry blended with the free flowing pigment (FFP), preferably with the neat free flowing pigment (nFFP), obtaining the mixture (M). Subsequently this mixture (M) can be stored or directly (continuously) conveyed to the inlet of the melting extruder according to the step (b2). For the additional steps (b2) to (b5) reference is made to the information provided above, preferably with the proviso that the solid pigmented polymer product (sPGPP) is in the form of solid pigmented polymer pellets (sPPP).

Essential aspect of the present invention is that the (neat) free flowing pigment ((n)FFP) is not melt mixed with any conventional diluting polymer which is used in the production of masterbatches, but with a polymer which constitutes the main polymer in the final product, i.e. in the shaped article. Thus irrespective whether the process steps (a1) to (a4) and (b1) to (b5), are embedded in a post-treatment step or not, the solid polymer (sP) has been chosen in a manner that the polymer (P) constitutes integral part of the shaped article.

For this reason it is especially preferred that the solid pigmented polymer product (sPGPP) in form of solid pigmented pellets (sPPP) after step (a4) or (b5) is further converted in a step (c1) into a shaped article. Accordingly it is preferred that the conversion step (c1) comprises a further melt extruding step. In such a case it is especially preferred that the solid pigmented polymer product (sPGPP) after step (a4) or (b5) is solid pigmented polymer pellets (sPPP). Said solid pigmented polymer pellets (sPPP) are melt extruded in step (c1) and subsequently formed into a shaped article. The article forming step can be for instance injection molding step, blow molding step or extrusion molding step. The techniques are well known in the art. During the melt extrusion step of step (c1) further additives and polymers can be added. However in one embodiment no further polymers are added during step (c1). Accordingly the shaped article is preferably a pipe, a layer(s) of a cable or wire, a packaging, a household appliance, an industrial appliance or a part of a vehicle, a film (e.g. packaging film, bag, sack,), fiber product (e.g. fiber, fabric, industrial films, like geomembranes or agriculture films etc.) or conductive carbon black product. Preferably the shaped article is a pipe product (pipe or pipe fitting).

The present invention further provides a process for producing solid pigmented polymer pellets (sPPP) according to steps (a1) to (a4) or, and preferably, steps (b1) to (b5), as defined above including the preferred embodiments of the process.

The present invention provides also solid pigmented polymer pellets (sPPP) comprising, preferably consisting of, of the polymer composition (PC) as defined above in embodiment A) including the preferred embodiments of polymer composition (PC).

In most preferred embodiment of the invention the solid pigmented polymer pellets (sPPP) (produced according to the process defined above including the step (a1) to (a4) or (b1) to (b4)) are used in step (c1) for producing a pipe or pipe fitting. The pipe convertors preferably produce the pipes in a pipe extrusion process, and the pipe fittings, respectively, in a molding, preferably injection molding.

Pipe production process:

Pipes can be produced from the solid pigmented polymer pellets (sPPP) according to the pipe extrusion methods known in the art. Thus, according to one preferred method the molten solid pigmented polymer pellets (sPPP) are extruded through an annular die to a desired internal diameter. The pipe extruder preferably operates at a relatively low temperature and therefore excessive heat build-up should be avoided. Extruders having a high length to diameter ratio L/D more than 15, preferably of at least 20 and in particular of at least 25 are preferred. The modem extruders typically have an L/D ratio of from about 30 to 35.

The solid pigmented polymer pellets (sPPP) are melted optionally together with further components, such as further polymer components, preferably without further polymer components, and/or further additives, and the obtained melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After said obtained melt leaves the die it is calibrated to the correct diameter. In one method the extrudate is directed into a metal tube (calibration sleeve). The inside of the extrudate is pressurised so that the plastic is pressed against the wall of the tube.

According to another method the extrudate leaving the die is directed into a tube having a perforated section in the centre. A slight vacuum is drawn through the perforation to hold the pipe against the walls of the sizing chamber.

After the sizing the pipe is cooled, typically in a water bath having a length of about 5 meters or more.

Pipe fitting production process

As to pipe fittings, the solid pigmented polymer pellets (sPPP) are typically molded, preferably injection molded or blown molded, more preferably injection molded, in a conventional manner using conventional molding equipment, to a shape of pipe fitting.

Thus in one preferred embodiment the solid pigmented polymer product (sPGPP) is a pipe or pipe fitting which comprises, preferably consists of, the polymer composition (PC) as defined above, wherein the polymer composition (PC) is free of any carrier polymer for the pigment (PG), which carrier polymer is other than the polymer (P). The pigment (PG) present in the polymer composition (PC) of the pipe or the pipe fitting has been (neat) free flowing pigment ((n)FFP) at time of addition to the polymer (P) of polymer composition (PC) of the pipe or pipe fitting. That is the (neat) free flowing pigment ((n)FFP) has not been immobilized by melt mixing to the polymer (P) or any polymer, like carrier polymer, when combined with the polymer (P).

Most preferably said pipe or pipe fitting consists of the polymer composition (PC), wherein said polymer composition comprises, preferably consists of,

(a) at least 40 wt.-% of the polymer (P),
(b) less than 10 wt.-% of the pigment (PG),
(c) optional further polymer component(s), and
(d) optional further additives than pigment (PG).

In one especially preferred embodiment, the pipe or pipe fitting comprises less than 10 wt.-% of the pigment (PG), preferably carbon black, like in the range of 0.01 to 10 wt.-%, more preferably in the range of 0.1 to 8.0 wt.-%, yet more preferably in the range of 1.0 to 7.0 wt.- %, of the pigment (PG).

The polymer composition (PC) of the pipe or pipe fitting is as disclosed above or below in claims, including the preferable properties and embodiments thereof.

In the following the invention will be further described by way of examples.

**EXAMPLES**

**1. Definitions/Measuring Methods**

The following definitions of terms and determination methods apply for the above general description of the invention as well as to the below examples unless otherwise defined.

**MFR$_2$ (230 °C)** is measured according to ISO 1133 (230 °C, 2.16 kg load).

**MFR$_2$ (190 °C)** is measured according to ISO 1133 (190 °C, 2.16 kg load).

**MFR$_5$ (190 °C)** is measured according to ISO 1133 (190 °C, 5 kg load).

**FRR$_{21/5}$** is the melt flow ratio of MFR$_{21}$ (190°C) and MFR$_5$ (190 °C) [MFR$_{21}$/MFR$_5$].

**MFR$_{21.6}$ (190 °C)** is measured according to ISO 1133 (190 °C, 21.6 kg load).

The **Density** was measured according to ISO 1183-1 - method A (2004). Sample preparation is done by compression moulding in accordance with ISO 1872-2:2007.

The **pigment,** especially carbon black content, was measured according to ASTM D1603 The **degree of pigment, especially carbon black, dispersion** in polyolefin pipes was measured according ISO 18 553/2002-03-01 as follows:

Pellets of the composition which are obtained after the applicable compounding step are analysed by collecting 6 different pellets where from each pellet, one cut is used (thickness cut $15\pm2$ $\mu$m). The cut for the measurement of the rating should be taken near the middle of the pellet (sample) with rotation microtome Type Leica RM2265. Preferably, the cut is in flow direction of the melt through the whole of the pelletizer.

The cuts are evaluated at a magnification of 40x and the size and the number of the particles on the total area of each cut are determined. All particles with a diameter of > 5 $\mu$m are counted. Transmission light microscope Leica DM5500B, with Leica Application Suite Software was used for imaging and particle size measurements. The lower the composition is rated in this test, the better is the dispersion of the composition.

**Surface area:** BET with N$_2$ gas ASTM D 3663, apparatus Micrometrics Tristar 3000 **White spot rating** was determined according to ISO 18553

A sample of a composition (including a pigment to make the inhomogeneities visible, e.g. carbon black in an amount of around 2.5 wt%) which is obtained after a single compounding step are analysed by collecting 6 different pellets where from each pellet, one cut is used as described above (thickness $15\pm2$ micrometer).

The cut for the measurement of the rating should be taken near the middle of the pellet (sample) with rotation microtome Type Leica RM2265. Preferably, the cut is in flow direction of the melt through the whole of the pelletizer.

The cuts are evaluated at a magnification of 40x and the size and the number of the particles on the total area of each cut are determined. i.e. the part of the surface, of the non-coloured inclusions ("white spots", agglomerates, particles) on a total surface of each cut is determined. All particles with a diameter of > 5 $\mu$m are counted.

All The "white spot area" is then expressed as the averaged fraction of the white spots on the total surface of the sample cut. Transmission light microscope Leica DM5500B, with Leica Application Suite Software was used for imaging and particle size measurements.

**Dynamic Shear Measurements (frequency sweep measurements)**

**Eta2.7 and SHI - Shear Thinning Indexes are calculated:**

The characterisation of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T °C (T by 230 °C for PP and 190°C for PE) applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin{(\omega t + \delta)} \qquad (2)$$

where

σ₀ and γ₀ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, n*, the dynamic shear viscosity, η', the out-of-phase component of the complex shear viscosity η" and the loss tangent, tan δ which can be expressed as follows:

$$G' = \frac{\sigma_0}{\gamma_0}\cos\delta \qquad [Pa] \qquad (3)$$

$$G'' = \frac{\sigma_0}{\gamma_0}\sin\delta \qquad [Pa] \qquad (4)$$

$$G^* = G' + iG'' \qquad [Pa] \qquad (5)$$

$$\eta^* = \eta' - i\eta'' \qquad [Pa.s] \qquad (6)$$

$$\eta' = \frac{G''}{\omega} \qquad [Pa.s] \qquad (7)$$

$$\eta'' = \frac{G'}{\omega} \qquad [Pa.s] \qquad (8)$$

Besides the above mentioned rheological functions one can also determine other rheological parameters such as the so-called elasticity index EI(x). The elasticity index EI(x) is the value of the storage modulus, G' determined for a value of the loss modulus, G" of $x$ kPa and can be described by equation 9.

$$EI(x) = G' \, for \; (G'' = x \, kPa) \qquad [Pa] \qquad (9)$$

For example, the EI(5kPa) is the defined by the value of the storage modulus G', determined for a value of G" equal to 5 kPa.
The determination of so-called Shear Thinning Indexes is done, as described in equation 10.

$$SHI(x/y) = \frac{Eta^* \; for \; (G^*=x \, kPa)}{Eta^* \; for \; (G^*=y \, kPa)} \qquad [Pa] \qquad (10)$$

For example, the SHI (2.7/210) is defined by the value of the complex viscosity, in Pa.s, determined for a value of G* equal to 2.7 kPa, divided by the value of the complex viscosity, in Pa.s, determined for a value of G* equal to 210 kPa.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"- Interpolate y-values to x-values from parameter"* and the *"logarithmic interpolation type"* were applied. References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995

[3] Definition of terms relating to the non-ultimate mechanical properties of polymers, Pure & Appl. Chem., Vol. 70, No. 3, pp. 701-754, 1998

**Eta 747 Pa** (Sagging):

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. An 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

**Charpy impact strength** was determined according to ISO179/1eA:2000 on V-notched samples of 80x10x4 mm$^3$ 0°C (Charpy impact strength (0°C)) and at -20°C (Charpy impact strength (-20°C)). Samples were cut from plaques of 4 mm thickness prepared by compression molding according to ISO 293:2004 using the conditions defined in chapter 3.3 of ISO 1872-2:2007.

**Tensile Modulus; Tensile strain at break** are measured according to ISO 527-2 (cross head speed = 1 mm/min; 23 °C) using injection molded specimens as described in EN ISO 1873-2 (dog bone shape, 4 mm thickness).

**Pressure test on notched pipes (NPT); Slow crack propagation resistance**

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 ± 1 mm.

$$h = 0.5\left[d_{em} - \sqrt{(d_{em}^2 - b_S^2)}\right] + 0.866\, b_S$$

where

$b_S$    is the width of machined surface of the notch in mm;
$d_{em}$    is the measured mean pipe outside diameter in mm.

**Pressure test on un-notched pipes (PT); resistance to internal pressure**

The resistance to internal pressure has been determined in a pressure test on pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 5.5 MPa at a temperature of 80°C and at a hoop stress at 5.3 MPa tested at a temperature of 80°C was applied.

**The Strain Hardening Modulus** (<Gp>)

The strain hardening test is a modified tensile test performed at 80 °C on a specially prepared thin sample. The Strain Hardening Modulus (MPa), <Gp>, is calculated from True Strain-True Stress curves; by using the slope of the curve in the region of True Strain, $\lambda$, is between 8 and 12.

The true strain, $\lambda$, is calculated from the length, l (mm), and the gauge length, $l_0$ (mm), as shown by Equation 1.

$$\lambda = \frac{l}{l_0} = 1 + \frac{\Delta l}{l_0} \qquad (1)$$

where $\Delta l$ is the increase in the specimen length between the gauge marks, (mm). The true stress, $\sigma$true (MPa), is calculated according to formula 2, assuming conservation of volume between the gauge marks:

$$\sigma_{true} = \sigma_n \lambda \qquad (2)$$

where $\sigma_n$ is the engineering stress.

The Neo-Hookean constitutive model (Equation 3) is used to fit the true strain- true stress data from which <Gp> (MPa) for 8 < $\lambda$ < 12 is calculated.

$$\sigma_{true} = \frac{<Gp>}{20}\left(\lambda^2 - \frac{1}{\lambda}\right) + C \qquad (3)$$

where C is a mathematical parameter of the constitutive model describing the yield stress extrapolated to $\lambda$ = 0.

Initially five specimens are measured. If the variation coefficient of <Gp> is greater than 2,5 %, then two extra specimens are measured. In case straining of the test bar takes place in the clamps the test result is discarded.

The PE granules of materials were compression molded in sheets of 0.30 mm thickness according to the press parameters as provided in ISO 1872-2, Table 2.

After compression molding of the sheets, the sheets were annealed to remove any orientation or thermal history and maintain isotropic sheets. Annealing of the sheets was performed for 1 h in an oven at a temperature of (120 $\pm$ 2) °C followed by slowly cooling down to room temperature by switching off the temperature chamber. During this operation free movement of the sheets was allowed.

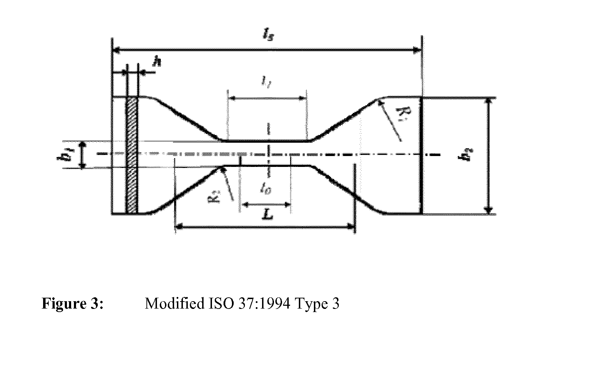

Next, the test pieces were punched from the pressed sheets. The specimen geometry of the modified ISO 37:1994 Type 3 (Figure 3) was used.

The sample has a large clamping area to prevent grip slip, dimensions given in Table 1.

**Table 1:** Dimensions of Modified ISO 37:1994 Type 3

| Dimension | | Size (mm) |
|---|---|---|
| L | start length between clamps | 3 0.0 +/- 0.5 |
| $l_0$ | Gauge length | 12.5 +/- 0.1 |
| $l_1$ | Prismatic length | 16.0 +/- 1.0 |
| $l_3$ | Total length | 70 |
| $R_1$ | Radius | 10.0 +/- 0.03 |
| $R_2$ | Radius | 8.06 +/- 0.03 |
| $b_1$ | Prismatic width | 4.0 +/- 0.01 |

(continued)

| Dimension | | Size (mm) |
|---|---|---|
| $b_2$ | Clamp width | 20.0 +/- 1.0 |
| h | Tickness | 0.30 + 0.05/0.30 - 0.03 |

The punching procedure is carried out in such a way that no deformation, crazes or other irregularities are present in the test pieces.

The thickness of the samples was measured at three points of the parallel area of the specimen; the lowest measured value of the thickness of these measurements was used for data treatment.

The following procedure is performed on a universal tensile testing machine having controlled temperature chamber and non-contact extensometer:

1. Condition the test specimens for at least 30 min in the temperature chamber at a temperature of $(80 \pm 1)$ °C prior to starting the test.
2. Clamp the test piece on the upper side.
3. Close the temperature chamber.
4. Close the lower clamp after reaching the temperature of $(80 \pm 1)$ °C.
5. Equilibrate the sample for 1 min between the clamps, before the load is applied and measurement starts.
6. Add a pre-load of 0.5 N at a speed of 5 mm/min.
7. Extend the test specimen along its major axis at a constant traverse speed (20 mm/min) until the sample breaks.

During the test, the load sustained by the specimen is measured with a load cell of 200 N. The elongation is measured with a non-contact extensometer.

**The rapid crack propagation (RCP) resistance** of a pipe is determined according to a method called the S4 test (Small Scale Steady State), which has been developed at Imperial College, London, and which is described in ISO 13477: 1997 (E). According to the RCP-S4 test a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness have been selected to be 250 mm and 22.7 mm, respectively. While the exterior of the pipe is at ambient pressure (atmospheric pressure), the pipe is pressurised internally, and the temperature of the pipe is kept constant at a temperature of 0°C. The pipe and the equipment surrounding it are thermostated to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 times the pipe diameter, is measured for each test and is plotted against the set test temperature. If the crack length exceeds 4.7 times the pipe diameter, the crack is assessed to propagate. If the pipe passes the test at a given pressure, the pressure is increased successively until a pressure is reached, at which the pipe no longer passes the test and the crack propagation exceeds 4.7 times the pipe diameter. The critical pressure ($p_{crit}$), i.e. the ductile brittle transition pressure as measured according to ISO 13477: 1997 (E) is the highest pressure at which the pipe passes the test. The higher the critical pressure ($p_c$) the better, since it results in an extension of the applicability of the pipe. In case the rapid crack propagation resistance of the composition is reported, a specimen as defined above has been prepared and the rapid crack propagation resistance determined thereon.

**Material:**

CB is the commercial carbon black "Printex Alpha A" powder from Orion having a iodine absorption number of 118g/kg according to ASTM D1510 and oil absorption number of 98 cc/100 according to ASTM D2414. It is a neat free flowing pigment (nFFP).

CBMB is a carbon black masterbatch obtained by melt blending 60 wt.-% of a high density polyethylene ($MFR_2$ (190 °C) of 12 g/10min; density of 962 kg/m$^3$) and 40 wt.-% of a carbon black CB as defined above. It is masterbatch of an immobilized pigment in a polymer matrix.

HDPE1 is the commercial high density polyethylene having a 1-butene content of 1.2 wt.-% (0.6 mol-%), a density of 950.5 kg/m$^3$ and $MFR_5$ (190 °C) of 0.25 g/10min. It is a solid polymer (sP)

HDPE2 is the commercial polyethylene grade produced by Ziegler Natta catalyst having a 1-hexene content of 2.4 wt.-% (0.8 mol-%), a density of 949 kg/m$^3$ and MFR$_5$ (190 °C) of 0.23 g/10min. It is a solid polymer (sP)

AD additive package containing 30 wt.-% Irganox 1010, 30 wt.-% Irgafos 168 and 40 wt.-% calcium stearate.

Comparative examples:

CE1: natural HDPE1 (no carbon black (CB) or carbon black masterbatch (CBMB) added)
CE2 and CE3: HDPE1 with CBMB with different output rate
CE4: natural HDPE2 (no carbon black (CB) or carbon black masterbatch (CBMB) added)
CE5 and CE6: HDPE2 with CBMB with different output rate

**Process:**

The equipment used was a Kobe LCM100H lab line with the following process parameter: Output rates: 460 kg/hr and 520 kg/hr

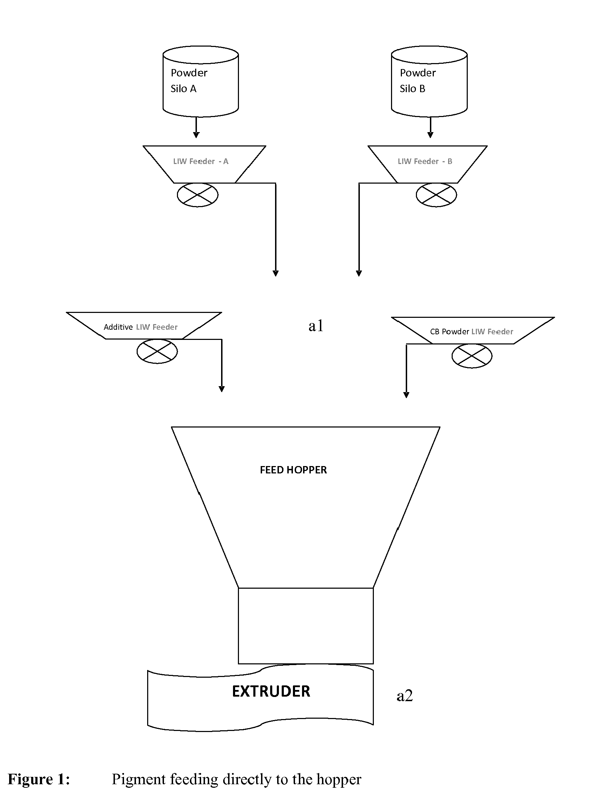

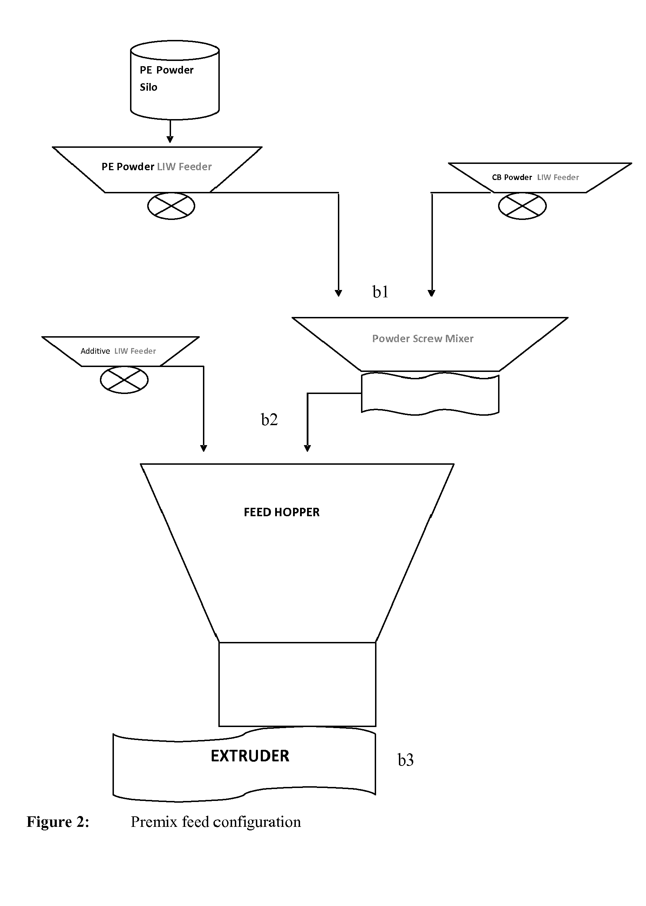

Two different dosing regimes were applied. First CB or CBMB were added directly in the hopper of the Kobe LCM100H lab line (compare figure 1).

**Table 1a:** Inventive examples: HDPE 1: feeding of HDPE 1 with CB

|  |  | IE1 | IE2 |
|---|---|---|---|
| HDPE1 | [wt.-%] | 97.33 | 97.33 |
| CB | [wt.-%] | 2.30 | 2.30 |
| AD | [wt.-%] | 0.37 | 0.37 |
| Output | [kg/hr] | 460 | 520 |
| MFR$_5$ | [g/10min] | 0.21 | 0.22 |
| FRR$_{21/5}$ | [-] | 35 | 34 |
| Density | [kg/m$^3$] | 961 | 961 |
| Eta 747 Pa | [Pa■s] | 600,080 | 613,090 |
| Eta 2.7 Pa | [Pa■s] | 328,680 | 344,930 |
| CI @ 23 °C | [kJ/m$^3$] | 21.6 | 22.3 |
| CI @ -20 °C | [kJ/m$^3$] | 10.4 | 10.6 |
| TM | [MPa] | 1,099 | 1,117 |
| TS | [MPa] | 26.2 | 26.8 |
| DR | [-] | 0.6 | 0.5 |
| WS | [-] | 3.8 | 2.8 |

**Table 1b:** Inventive examples HDPE 2: feeding of HDPE 2 with CB

|  |  | IE3 | IE4 |
|---|---|---|---|
| HDPE2 | [wt.-%] | 97.33 | 97.33 |
| CB | [wt.-%] | 2.30 | 2.30 |
| AD | [wt.-%] | 0.37 | 0.37 |
| Output | [kg/hr] | 460 | 520 |
| MFR$_5$ | [g/10min] | 0.24 | 0.23 |
| FRR$_{21/5}$ | [-] | 40 | 36 |
| Density | [kg/m$^3$] | 961 | 961 |
| Eta 747 Pa | [Pa■s] | 646,840 | 640,880 |

(continued)

|  |  | IE3 | IE4 |
|---|---|---|---|
| Eta 2.7 Pa | [Pa∎s] | 357,610 | 352,880 |
| CI @ 23 °C | [kJ/m$^3$] | 30.5 | 30.2 |
| CI @ -20 °C | [kJ/m$^3$] | 13.4 | 13.0 |
| TM | [MPa] | 1,122 | 1,107 |
| TS | [MPa] | 25.6 | 25.7 |
| DR | [-] | 0.5 | 0.5 |
| WS | [-] | 7.0 | 5.3 |

**Table 2a:** Inventive examples: HDPE 1: Premix of HDPE 1 with CB and subsequent feeding

|  |  | IE5 | IE6 |
|---|---|---|---|
| HDPE1 | [wt.-%] | 97.33 | 97.33 |
| CB | [wt.-%] | 2.30 | 2.30 |
| AD | [wt.-%] | 0.37 | 0.37 |
| Output | [kg/hr] | 460 | 520 |
| MFR | [g/10min] | 0.21 | 0.20 |
| FRR$_{21/5}$ | [-] | 33 | 34 |
| Density | [kg/m$^3$] | 961 | 960 |
| Eta 747 Pa | [Pa∎s] | 632,990 | 594,630 |
| Eta 2.7 Pa | [Pa∎s] | 332,770 | 337,870 |
| CI @ 23 °C | [kJ/m$^3$] | 22.1 | 23.1 |
| CI @ -20 °C | [kJ/m$^3$] | 12.4 | 12.1 |
| TM | [MPa] | 1,096 | 1,104 |
| TS | [MPa] | 25.4 | 25.7 |
| DR | [-] | 0.5 | 0.5 |
| WS | [-] | 2.8 | 4.2 |

**Table 2b:** Inventive examples: HDPE 2: Premix of HDPE 1 with CB and subsequent feeding

|  |  | IE7 | IE8 |
|---|---|---|---|
| HDPE2 | [wt.-%] | 97.33 | 97.33 |
| CB | [wt.-%] | 2.30 | 2.30 |
| AD | [wt.-%] | 0.37 | 0.37 |
| Output | [kg/hr] | 460 | 520 |
| MFR5 | [g/10min] | 0.23 | 0.22 |
| FRR$_{21/5}$ | [-] | 40 | 39 |
| Density | [kg/m$^3$] | 960 | 961 |
| Eta 747 Pa | [Pa∎s] | 684,210 | 660,670 |
| Eta 2.7 Pa | [Pa∎s] | 358,330 | 360,170 |

(continued)

| | | IE7 | IE8 |
|---|---|---|---|
| CI @ 23 °C | [kJ/m$^3$] | 30.5 | 31.1 |
| CI @ -20 °C | [kJ/m$^3$] | 14.7 | 15.0 |
| TM | [MPa] | 1,124 | 1,129 |
| TS | [MPa] | 25.4 | 25.8 |
| DR | [-] | 0.5 | 0.5 |
| WS | [-] | 5.8 | 3.8 |

**Table 3a:** Comparative examples: HDPE 1; feeding of HDPE 1 with CBMB

| | | CE1 | CE2 | CE3 |
|---|---|---|---|---|
| HDPE1 | [wt.-%] | 100 | 93.88 | 93.88 |
| CBMB | [wt.-%] | - | 5.75 | 5.75 |
| AD | [wt.-%] | - | 0.37 | 0.37 |
| Output | [kg/hr] | - | 460 | 520 |
| MFR$_5$ | [g/10min] | 0.20 | 0.24 | 0.26 |
| FRR$_{21/5}$ | [-] | 29 | 34 | 33 |
| Density | [kg/m$^3$] | 950 | 962 | 962 |
| Eta 747 Pa | [Pa■s] | 411,480 | 544,630 | 525,370 |
| Eta 2.7 Pa | [Pa■s] | 236,160 | 299,420 | 289,780 |
| CI @ 23 °C | [kJ/m$^3$] | 23.7 | 20.6 | 20.7 |
| CI @ -20 °C | [kJ/m$^3$] | 13.5 | 9.5 | 9.7 |
| TM | [MPa] | 923 | 1,073 | 1,056 |
| TS | [MPa] | 27.2 | 25.4 | 26.0 |
| DR | [-] | - | 0.5 | 0.6 |
| WS | [-] | - | 3.7 | 5.2 |

**Table 3b**: Comparative examples: HDPE 2: feeding of HDPE 2 with CBMB

|  |  | **CE4** | **CE5** | **CE6** |
|---|---|---|---|---|
| HDPE2 | [wt.-%] | 100 | 93.88 | 93.88 |
| CBMB | [wt.-%] | - | 5.75 | 5.75 |
| AD | [wt.-%] | - | 0.37 | 0.37 |
| Output | [kg/hr] | - | 460 | 520 |
| $MFR_5$ | [g/10min] | 0.25 | 0.25 | 0.26 |
| $FRR_{21/5}$ | [-] | 33 | 35 | 34 |
| Density | [kg/m$^3$] | 949 | 961 | 961 |
| Eta 747 Pa | [Pa·s] | 553,610 | 566,220 | 551,600 |
| Eta 2.7 Pa | [Pa·s] | 317,870 | 318,350 | 308,240 |
| CI @ 23 °C | [kJ/m$^3$] | 37.5 | 28.6 | 28.3 |
| CI @ -20 °C | [kJ/m$^3$] | 21.6 | 11.0 | 11.1 |
| TM | [MPa] | 1,036 | 1,066 | 1,079 |
| TS | [MPa] | 25.2 | 26.4 | 25.7 |
| DR | [-] | - | 0.5 | 0.5 |
| WS | [-] | - | 5.3 | 4.2 |

CI       Charpy impact

TM     Tensile modulus

TS      Tensile strength

DR     carbon black dispersion rating

WS     white spot rating

Pipe extrusion was done on a Reifenhauser RH 381 extruder with die head and calibrator sleeve as required for 110mm pipe.

| Temperature profile during extrusion: | 75 to 185 °C |
|---|---|
| Wall thickness: | 10 mm to 11 mm |
| Diameter: | 110 to 110.7 mm |

**Table 4**: Pipe testing

|  | HPT[1] | HPT[2] | NPT[3] | RCP[4] |
|---|---|---|---|---|
|  | [hrs] | [hrs] | [hrs] | [bar] |
| IE2 | 566 | NA | 982 | >10 |
| IE2 | 257 | NA | - | - |
| IE4 | 112 | 670 | 506 | >10 |
| IE4 | 255 | 670 | - | - |

HPT[1] hydrostatic pressure test at 5.5 MPa until failure was tested on a 110 mm pipe (minimum requirement 165 hrs)
HPT[2] hydrostatic pressure test at 5.3 MPa until failure was tested on a 110 mm pipe (minimum requirement 330 hrs)
NPT[3] notched pressure test at 4.6 MPa until failure was tested on a 110 mm pipe (minimum requirement is 500 hours)
RCP[4] rapid crack propagation at -3 °C was tested on a 110 mm pipe

It can be seen that white spot and CB dispersion rating are similar or better than that when using a carbon black masterbatch.
It can be further seen that melt viscosity (Eta 747 and Eta 2.7kPa) is increased in the inventive examples versus the comparative examples. This correlates to improved melt strength which is required for minimizing sagging in pipe conversion. Melt strength is also a requirement in production of drip pipe for irrigation. Tensile modulus is increased and tensile strength is equivalent or shows a slight improvement in the inventive examples. Similarly, impact properties are equivalent or improved. Thus better impact-stiffness balance is achieved compared to standard pigment incorporation with a masterbatch.

**Claims**

1.  Process for producing a solid pigmented polymer product (sPGPP) of a polymer composition (PC) comprising a polymer (P) and a pigment (PG), wherein said process comprises the steps in the order of

    (a1) feeding free flowing pigment (FFP), preferably neat free flowing pigment (nFFP), and solid polymer (sP) in the same inlet, e.g. in the same hopper, of a melt extruder,
    (a2) melt mixing the solid polymer (sP) and the free flowing pigment (FFP), preferably the neat free flowing pigment (nFFP), in said melt extruder to obtain the polymer composition (PC) in a molten form, wherein the polymer (P) is in a molten state in which the pigment (PG) is dispersed,
    (a3) extruding the polymer composition (PC) in a molten form from the melt extruder and
    (a4) converting the molten polymer composition (PC) into said solid pigmented polymer product (sPGPP);

    or

    (b1) combining free flowing pigment (FFP), preferably neat free flowing pigment (nFFP), with solid polymer (sP) obtaining thereby a mixture (M) of free flowing pigment (FFP) and solid polymer (sP),
    (b2) feeding said mixture (M) in the inlet, e.g. in the hopper, of the melt extruder,
    (b3) melt mixing said mixture (M) in said melt extruder to obtain the polymer composition (PC) in a molten form, wherein the polymer (P) is in a molten state in which the pigment (PG) is dispersed,
    (b4) extruding the polymer composition (PC) in a molten form from the melt extruder and
    (b5) converting the molten polymer composition (PC) into said solid pigmented polymer product (sPGPP).

2.  Process according to claim 1, wherein the solid pigmented polymer product (sPGPP) is in the form of a solid pigmented polymer pellets (sPPP) or a shaped article, preferably the shaped article is selected from the group consisting of extruded article, injection molded article and blow molded article, more preferably the shaped article is selected from pipe, pipe fitting, a layer of a cable or wire, packaging, household appliance, industrial appliance and part of a vehicle, film, and fiber.

3.  Process according to claim 1, wherein the process of claim 1 is part of a polymerization production line in which first the polymer (P) is produced in at least one reactor and subsequently discharged in solid form, said discharged solid polymer (sP) is treated with (neat) free flowing pigment ((n)FFP) in a post treatment step comprising the steps (a1) to (a4) or (b1) to (b5), wherein solid pigmented polymer product (sPGPP) is in the form of solid pigmented polymer pellets (sPPP) for producing shaped articles.

4.  Process for producing a solid pigmented polymer product (sPGPP) in a continuous polymerization production line, wherein the solid pigmented polymer product (sPGPP) is a polymer composition (PC) comprising a polymer (P) and a pigment (PG), wherein said process in the polymerization production line comprises the steps in the order of

    (A) producing the polymer (P) in at least one reactor
    (B) discharging the polymer (P) in solid form from the reactor, and
    (C) in the post-treatment-line
    (a1) feeding free flowing pigment (FFP), preferably neat free flowing pigment (nFFP), and solid polymer (sP) in the same inlet of a melt extruder,
    (a2) melt mixing the solid polymer (sP) and the free flowing pigment (FFP), preferably the neat free flowing pigment (nFFP), in said melt extruder to obtain the polymer composition (PC) in a molten form, wherein the polymer (P) is in a molten state in which the pigment (PG) is dispersed,
    (a3) extruding the polymer composition (PC) in a molten form from the melt extruder and
    (a4) converting the molten polymer composition (PC) into solid pigmented polymer pellets (sPPP);
    or
    (b1) combining (neat) free flowing pigment ((n)FFP) with solid polymer (sP) obtaining thereby a mixture (M) of free flowing pigment (FFP) and solid polymer (sP),

(b2) feeding said mixture (M) in the inlet of the melt extruder,
(b3) melt mixing said mixture (M) in said melt extruder to obtain the polymer composition (PC) in a molten form, wherein the polymer (P) is in a molten state in which the pigment (PG) is dispersed,
(b4) extruding the polymer composition (PC) in a molten form from the melt extruder and
(b5) converting the molten polymer composition (PC) into solid pigmented polymer pellets (sPPP).

5. Process according to claim 4, wherein said process in the polymerization production line comprises the steps in the order of

(A) producing the polymer (P) in at least one reactor
(B) discharging the polymer (P) in solid form from the reactor, and
(C) in the post-treatment-line
(b1) adding (neat) free flowing pigment ((n)FFP) and solid polymer (sP) to the same conveying means (CM) to convey together the (neat) free flowing pigment ((n)FFP) and the solid polymer (sP) to the same inlet of a melt extruder obtaining thereby a mixture (M) of free flowing pigment (FFP) and solid polymer (sP),
(b2) feeding said mixture (M) in the inlet of the melt extruder,
(b3) melt mixing said mixture (M) in said melt extruder to obtain the polymer composition (PC) in a molten form, wherein the polymer (P) is in a molten state in which the pigment (PG) is dispersed,
(b4) extruding the polymer composition (PC) in a molten form from the melt extruder and
(b5) converting the molten polymer composition (PC) into solid pigmented polymer pellets (sPPP).

6. Process according to any one of the preceding claims, wherein

(a) the inlet is the hopper,
and/or
(b) the conveying means comprises or is a screw conveyer.

7. Process according to any one of the preceding claims, wherein

(a) the solid polymer (sP) / the polymer (P) comprises polyethylene and/or polypropylene, preferably consists of polyethylene;
and/or
(b) the solid polymer (sP) is in form of a powder or pellets.

8. Process according to any one of the preceding claims, wherein the (neat) free flowing pigment ((n)FFP) is

(a) carbon black and/or a colored pigment different to carbon black, preferably carbon black,
and/or
(b) selected from the form consisting of powder, pellet, nanotube, nanofiber and mixtures thereof.

9. Process according to any one of the preceding claims, wherein the solid pigmented polymer product (sPGPP) comprises, preferably consists of, the polymer composition (PC), wherein said polymer composition (PC) comprises, preferably consists of,

(a) at least 40 wt.-% of polymer (P),
(b) less than 10 wt.-% of the pigment (PG), like 0.1 to 10 wt.-% of the pigment (PG),
(c) optional further polymer component(s), and
(d) optional further additives than the pigment (PG),
wherein further said solid pigmented polymer product (sPGPP) is in the form of solid pigmented polymer pellets (sPPP) or in the form of a shaped article, preferably in the form of solid pigmented polymer pellets (sPPP) for producing a shaped article.

10. Process according to any one of the preceding claims, wherein the solid pigmented polymer product (sPGPP) comprises, based on the total amount of the solid pigmented polymer product (sPGPP), less than 10 wt.-% of the pigment (PG).

11. Process according to any one of the preceding claims 1 to 8, wherein the solid pigmented polymer product (sPGPP) comprises, preferably consists of, the polymer composition (PC), wherein said polymer composition (PC) comprises, preferably consists of,

> (a) at least 40 wt.-% of the polymer (P),
> (b) 10 to 45 wt.-% of the pigment (PG),
> (c) optional further polymer component(s), and
> (d) optional further additives than the pigment (PG),
> wherein further said solid pigmented polymer product (sPGPP) is in the form of solid pigmented polymer pellets (sPPP) or in the form of a shaped article, preferably in the form of solid pigmented polymer pellets (sPPP) for producing a shaped article.

12. Pellets or a shaped article comprising, preferably consisting of, a polymer composition (PC) as defined in any one of the claims 1 to 11, wherein the polymer composition (PC) is free of any carrier polymer for the pigment (PG), which carrier polymer is other than the polymer (P).

13. The shaped article according to claim 12, which is a pipe comprising, preferably consisting of, a polymer composition (PC) as defined in any one of the claims 1 to 11, wherein the polymer composition (PC) is free of any carrier polymer for the pigment (PG), which carrier polymer is other than the polymer (P).

14. The pipe according to claim 13, wherein polymer (P) is a polyethylene, preferably a multimodal polyethylene with respect to the weight average molecular weight.

15. The pipe according to claim 14, wherein polymer composition (PC) comprises, preferably consists of,

> (a) at least 40 wt.-% of the polymer (P),
> (b) 10 to 45 wt.-% of the pigment (PG),
> (c) optional further polymer component(s), and
> (d) optional further additives than the pigment (PG).

**Figure 1:** Pigment feeding directly to the hopper

**Figure 2:** Premix feed configuration

**Figure 3:**      Modified ISO 37:1994 Type 3

Europäisches
Patentamt

European
Patent Office

Office européen
des brevets

**EUROPEAN SEARCH REPORT**

Application Number

EP 13 19 2698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 507 951 A (MORECROFT ANDREW S ET AL) 21 April 1970 (1970-04-21) | 1-12 | INV.<br>C08J3/20 |
| A | * claims 1-4 * | 13-15 | B29C47/10<br>C08K3/04 |
| X | US 4 946 641 A (SKINNER MAJORIE B [US]) 7 August 1990 (1990-08-07) | 1-12 | |
| A | * claims 1-3 * | 13-15 | |
| A,D | EP 2 058 356 A1 (TOTAL PETROCHEMICALS RES FELUY [BE]) 13 May 2009 (2009-05-13) * the whole document * | 1-15 | |

|  | TECHNICAL FIELDS SEARCHED (IPC) |
|---|---|
|  | C08J<br>C08K<br>B29C |

The present search report has been drawn up for all claims

| Place of search | Date of completion of the search | Examiner |
|---|---|---|
| Munich | 20 March 2014 | Puttins, Udo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 2698

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2014

| Patent document cited in search report | | Publication date | Patent family member(s) | | Publication date |
|---|---|---|---|---|---|
| US 3507951 | A | 21-04-1970 | DE | 1679858 A1 | 25-03-1971 |
| | | | FR | 1563652 A | 18-04-1969 |
| | | | GB | 1195708 A | 24-06-1970 |
| | | | US | 3507951 A | 21-04-1970 |
| US 4946641 | A | 07-08-1990 | NONE | | |
| EP 2058356 | A1 | 13-05-2009 | AT | 519805 T | 15-08-2011 |
| | | | DK | 2207839 T3 | 12-09-2011 |
| | | | EP | 2058356 A1 | 13-05-2009 |
| | | | EP | 2207839 A2 | 21-07-2010 |
| | | | ES | 2369228 T3 | 28-11-2011 |
| | | | KR | 20100076004 A | 05-07-2010 |
| | | | PT | 2207839 E | 17-10-2011 |
| | | | US | 2011015331 A1 | 20-01-2011 |
| | | | WO | 2009059967 A2 | 14-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009059967 A
- WO 2004106421 A
- US 4369267 A

### Non-patent literature cited in the description

- **HEINO, E.L. ; LEHTINEN, A. ; TANNER J. ; SEPPÄLÄ, J. ; NESTE OY.** Rheological characterization of polyethylene fractions. *Porvoo, Finland, Theor. Appl. Rheol., Proc. Int. Congr. Rheol, 11th,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995
- Definition of terms relating to the non-ultimate mechanical properties of polymers. *Pure & Appl. Chem.,* 1988, vol. 70 (3), 701-754
- Encyclopedia of Polymer Science and Engineering. vol. 14, 492-509